(19) **Europäisches Patentamt / European Patent Office / Office européen des brevets**

(11) **EP 2 194 672 B1**

(12) **EUROPEAN PATENT SPECIFICATION**

(45) Date of publication and mention of the grant of the patent:
**25.07.2012  Bulletin 2012/30**

(21) Application number: **08853972.1**

(22) Date of filing: **07.11.2008**

(51) Int Cl.:
*H04W 12/04* (2009.01)    *H04W 40/36* (2009.01)
*H04L 29/06* (2006.01)    *H04L 9/08* (2006.01)
*H04L 9/32* (2006.01)

(86) International application number:
**PCT/CN2008/072989**

(87) International publication number:
**WO 2009/067908 (04.06.2009 Gazette 2009/23)**

(54) **A PROTECTION METHOD AND DEVICE DURING A MOBILE IPV6 FAST HANDOVER**

VERFAHREN UND VORRICHTUNGZUM SCHUTZ BEI EINEM SCHNELLEN WEITERREICHEN IN EINER MOBILEN IPV6-UMGEBUNG

PROCÉDÉ ET DISPOSITIF DE PROTECTION LORS D'UN TRANSFERT RAPIDE DANS UN PROTOCOLE MOBILE IPV6

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **09.11.2007  CN 200710188106**

(43) Date of publication of application:
**09.06.2010  Bulletin 2010/23**

(73) Proprietor: **Huawei Technologies Co., Ltd.**
**Longgang District, Shenzhen**
**Guangdong 518129 (CN)**

(72) Inventor: **LI, Chunqiang**
**Shenzhen**
**Guangdong 518129 (CN)**

(74) Representative: **Thun, Clemens et al**
**Mitscherlich & Partner**
**Patent- und Rechtsanwälte**
**Sonnenstrasse 33**
**80331 München (DE)**

(56) References cited:
**WO-A2-2006/102565    CN-A- 1 921 488
CN-A- 1 980 231**

- **JAMES KEMPF DOCOMO LABS USA RAJEEV KOODLI NOKIA-SIEMENS RESEARCH CENTER: "Distributing a Symmetric FMIPv6 Handover Key using SEND ( ); draft-ietf-mipshop-handover-key-02.txt" IETF STANDARD-WORKING-DRAFT, INTERNET ENGINEERING TASK FORCE, IETF, CH, vol. mipshop, no. 2, 1 September 2007 (2007-09-01), XP015051447 ISSN: 0000-0004**
- **NARAYANAN QUALCOMM V ET AL: "Establishing Handover Keys using Shared Keys; draft-vidya-mipshop-handover-keys-aaa-04.t xt" IETF STANDARD-WORKING-DRAFT, INTERNET ENGINEERING TASK FORCE, IETF, CH, no. 4, 6 March 2007 (2007-03-06), XP015050534 ISSN: 0000-0004**
- **TIAN YE ET AL.: 'Identity-Based Hierarchical Access Authentication in Mobile IPv6 Network' CHINESE JOURNAL OF COMPUTERS vol. 30, no. 6, June 2007, page 709,8..., XP008132860**
- **J. KEMPF ET AL.: 'Distributing a Symmetric Fast Mobile IPv6 (FMIPv6) Handover Key Using SEcure Neighbor Discovery (SEND)', [Online] June 2008, XP015057236 Retrieved from the Internet: <URL:draft-ietf-mipshop- Handover-key>**

EP 2 194 672 B1

## Description

## FIELD OF THE INVENTION

The present disclosure relates to the technical field of communications, and more particularly to a protection method and device for a mobile IPv6 fast handover.

## BACKGROUND OF THE INVENTION

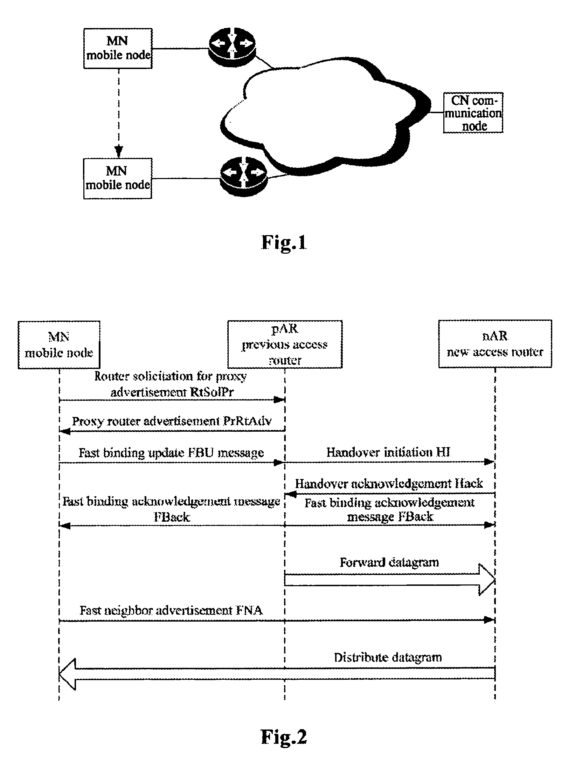

A mobile Internet Protocol version 6 (IPv6) makes a mobile node (MN) keep its connectivity when moving to another access router (AR) from one AR, the process of which is called as handover with reference to Fig. 1.

During handover, due to the link switching delay and IPv6 protocol operation, the MN cannot transmit or receive data packet within a certain time. Such a handover delay caused by a standard mobile IPv6 program (that is, mobile detection, new care of address configuration, binding update, and so on) is not acceptable for real-time flow, for example, voice over IP (VoIP). In addition, for the application which is not real time but pays close attention to throughout, the reduction of handover delay may also bring great benefits.

To reduce a handover delay, a Fast Handover for Mobile IPv6 (FMIPv6) extends the mobile IPv6. The mobile IPv6 fast handover makes the mobile node be capable of fast detecting whether the mobile node has moved to a new subnetwork. This is accomplished by providing, when the mobile node is still connected to the current subnetwork, information on a new access point and a relevant subnetwork prefix. The mobile IPv6 fast handover establishes a tunnel between a Previous Care of Address (PCoA) and a new Care of Address (nCoA), and the MN transmits a Fast Binding Update (FBU) message to a Previous Access Router (pAR). After receiving the FBU and acknowledging the validity of the nCoA of the MN by interacting with a New Access Router (nAR), the pAR transmits a Fast Binding Acknowledgement (FBAck) message to the MN, and establishes binding between the PCoA and nCoA on the pAR so that the flow transmitted to pAR link PCoA is redirected to the nCoA of a new access link.

The method has the problem. That is, if there is no mechanism for authenticating the FBU message, an attacker can transmit a forged FBU message to steal the flow of the MN or redirect the flow to a different address. To address this problem, the prior art provides a method for protecting FBU by distributing a shared key between the pAR and the MN through a Secure Neighbor Discovery (SeND) protocol and by using this shared key. The specific principle is as follows.

The SeND is used to protect a proxy router request and a proxy router advertisement message, and during interaction of the two messages, the MN and the AR transmit an encrypted and shared handover key. The MN generates a pair of public key and private key configured to encrypt and decrypt the exchange of the shared handover key, the public key being identical with the shared key used by SeND. The MN transmits a Router Solicitation for Proxy Advertisement (RtSolPr) message which carries a handover key request option including the public key configured to encrypt the handover key. A source address of the RtSolPt message is a Care of Address (CoA) generated by the MN based on Cryptographically Generated Address (CGA), and the message needs to be signed with MN CGA key, including a CGA parameter option. The AR authenticates the message by using SeND, the public key is used to encrypt a shared handover key after the message passes authentication, and the encrypted handover key is placed in the handover key reply option of a Proxy Router Advertisement (PrRtAdv) message and is transmitted to the MN, and the MN may obtain the shared handover key through decryption. When MN transmits FBU to AR, its authorized MAC can be generated by using the handover key.

The prior art has at least the following problems:

The solution needs to support the SeND, because in this case CoA is generated based on the CGA mode, the solution is not adapted to CoA generated by other ways. In addition, CGA is based on public key cryptography and is complex in calculation. Therefore, the mechanism makes overhead of resources larger for the mobile terminal with low computation ability and relatively valuable storage resources. In addition, in the SeND protocol, the MN also needs to authenticate the message transmitted by an AR, and thus the AR needs to sign the message transmitted by the AR by using the public key cryptography mechanism of the AR. This requires larger computation overhead and the support of a public key certificate mechanism.

JAMES KEMPF DOCOMO LABS USA RAJEEV KOODLI NOKIA-SIEMENS RESEARCH CENTER: "Distributing a Symmetric FMIPv6 Handover Key using SEND"; draft-ietf-mipshop-handover-key-02.txt" IETF STANDARD-WORDING-DRAFT, INTERNET ENGINEERING TASK FORCE, IETF, CH, vol, mipshop, no.2, 1 September 2007, XP015051447 discloses a method for provisioning a shared key from the Access Roter to the Mobile Node; the method is to protect this signaling. The Mobile Node generates a public/private key pair using the same public key algorithm as for SEND (RFC3971). The Mobile Node sends the public key to the Access Router. The Access Router encrypts a shared handover key using the public key and sends it back to the Mobile Node. The Mobile Node decrypts the shared handover key using the matching private key, and the handover key is then available for generating an authenticator on a Fast Binding Update. The Mobile Node and Access Router use the Routher Solicitation for Proxy Advertisement and Proxy Router Advertisement from Fast Mobile Ipv6 for the key exchange. The key exchange messages are required to have SEND security; that is, the source address is a CGA and the messages are signed using the CGA private key of the sending node.

NARAYANAN QUALCOMM V ET AL: "Establishing Handover Keys using Shared Keys; draft-vidya-mipshop-handover-keys-aaa-04.txt" IETF STANDARD-WORKING-DRAFT, INTERNET ENGINEERING TASK FORCE, IETF, CH, no. 4, 6 March 2007, XP015050534 ISSN:0000-0004 discloses a key management protocol to generate a handover between a mobile node (MN) and an access router (AR) for the purpose of securing Fast Mobile Ipv6 (FMIPv6) signaling messages.

## SUMMARY OF THE INVENTION

An embodiment of the present disclosure provides a protection method and device for a mobile IPv6 fast handover, protecting a fast-handover signaling of interaction between a mobile node and network side device in the scenario of a mobile IPv6 fast handover.

An embodiment of the present disclosure provides a protection method for a mobile IPv6 fast handover. The method includes the following steps: generating a fast-handover signaling protection key by using a key which is shared with a network side device; generating an authentication code according to the protection key; and adding the authentication code to a fast-handover signaling and transmitting the fast-handover signaling to a router, wherein the step of generating the fast-handover signaling protection key by using the key shared with the network side device comprises: generating the fast-handover signaling protection key by using the key shared with the network side device and by using the mobile node device identification and one or a plurality of the following parameters: a previous router identification, a new access router identification, a preset character string, a previous care of address, a new care of address, a length of the protection key, and a random number; wherein the mobile node device identification is a private identification generated for the mobile node according to the key shared with the network side device.

An embodiment of the present disclosure further provides a mobile node. The mobile node includes: a protection key generating unit, configured to generate a fast-handover signaling protection key by using a key which is shared with a network side device; an authentication code generating unit, configured to generate an authentication code according to the protection key generated by the protection key generating unit; and an authentication code adding unit, configured to add the authentication code generated by the authentication code generating unit to a fast-handover signaling and transmit the fast-handover signaling to a router, wherein the protection key is generated by the mobile node by using the key shared with the network side device, and by using the mobile node device identification and one or a plurality of the following parameters: a previous router identification, a new access router identification, a preset character string, a previous care of address, a new care of address, a length of the protection key, and a random number; wherein the mobile node device identification is a private identification generated for the mobile node according to the key shared with the network side device.

An embodiment of the present disclosure further provides a protection system for a fast IPv6 fast handover, including the preceding mobile node and a routing device, wherein the routing device inclueds: an authentication code acquiring unit, configured to acquire an authentication code carried in a fast-handover signaling from the mobile node; a protection key acquiring unit, configured to acquire, from a local device or a network side device, a protection key which is used by the mobile node to generate the authentication code, wherein the protection key is generated by the mobile node using a key shared with a network side device; and an authenticating unit, configured to authenticate, according to the protection key acquired by the protection key acquiring unit, the authentication code acquired by the authentication code acquiring unit, and configured to transmit a response to the mobile node when the authentication code passes authentication.

Compared with the prior art, the embodiment of the present disclosure has the following advantages: by using the shared key between the mobile node and the network side device, a fast-handover signaling protection key is derived to protect the fast-handover signaling. Such arrangement solves the security problem of the fast-handover message during a mobile IPv6 fast handover, decrease overhead during storing and calculating regarding the mobile node, and can be used to protect the downward fast-handover signaling of the SeND protocol that cannot be supported by the mobile node.

## BRIEF DESCRIPTION OF THE DRAWING(S)

Fig.1 is a schematic diagram illustrating a handover scenario of the mobile node in the prior art;

Fig.2 is a schematic diagram illustrating a fast-handover flow of the mobile node in the prior art;

Fig.3 is a flowchart illustrating a protection method for a mobile IPv6 fast handover according to the first embodiment of the present disclosure;

Fig.4 is a flowchart illustrating a protection method for a mobile IPv6 fast handover according to the second embodiment of the present disclosure;

Fig.5 is a flowchart illustrating a protection method for a mobile IPv6 fast handover according to the third embodiment of the present disclosure;

Fig. 6 is a flowchart illustrating a protection method for a mobile IPv6 fast handover according to the fourth embodiment of the present disclosure; and

Fig.7 is a schematic diagram illustrating a protection system for a mobile IPv6 fast handover according to the fifth embodiment of the present disclosure.

## DETAILED DESCRIPTION OF THE EMBODIMENTS

The embodiment of the present disclosure is further described below with reference to drawings and exemplary embodiments.

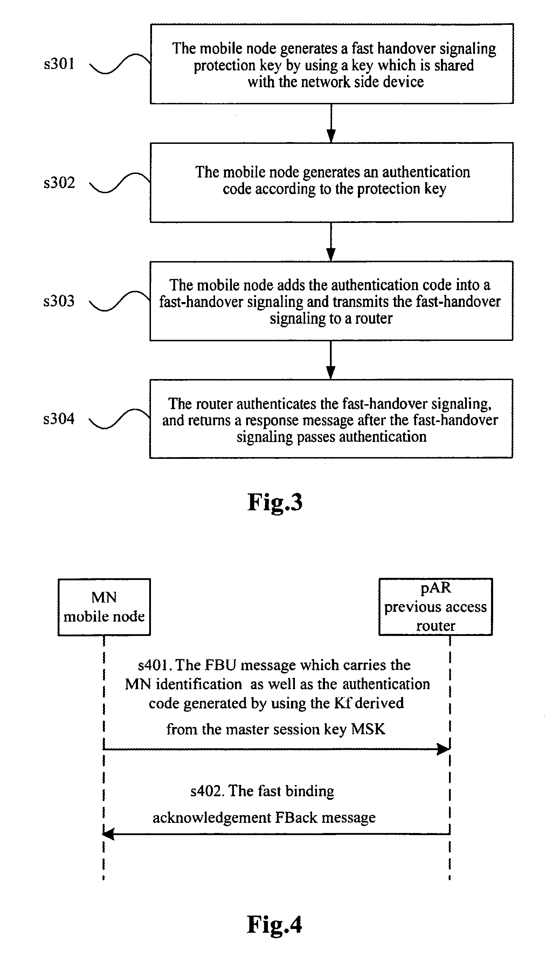

The first embodiment of the present disclosure provides a protection method for a mobile IPv6 fast handover, which is described below with reference to Fig.3. The protection method includes the following steps.

In step s301, the mobile node generates a fast-handover signaling protection key by using a key which is shared with the network side device.

Specifically, the shared key can be a Master Session Key (MSK) which is generated during an access authentication of the mobile node and is shared between the network side device and the mobile node. The key which has been shared between other mobile nodes and the network side device also can be used.

In step s302, the mobile node generates an authentication code according to the protection key.

Specifically, the step of generating the protection key may also involve other parameters including one or a plurality of the following parameters: a mobile node device identification, a previous router identification, a rear router identification, a preset character string, a previous care of address, a new care of address, a length of the protection key, and a random number.

In step s303, the mobile node adds the authentication code to a fast-handover signaling and transmits the fast-handover signaling to a router.

Specifically, the fast-handover signaling can be the Router Solicitation for Proxy Advertisement (RtSolPr) message or the fast binding update (FBU) message.

In step s304, the router authenticates the authentication code in the fast-handover signaling, and returns a response message after the authentication code passes authentication.

Specifically, the router first needs to acquire the protection key, and use the protection key to authenticate the authentication code. The acquisition of the protection key can be realized by a protection key authentication function entity on the router or a protection key authentication function entity in the network. The response message can be the proxy router advertisement (PrRtAdv) message or the fast binding update acknowledgement (FBack) message.

By using the method provided in the embodiment of the present disclosure, the shared key between the mobile node and the network side device is used to derive the fast-handover signaling protection key to protect the fast-handover signaling. This solves the security problem of the fast-handover message during a mobile IPv6 fast handover, makes overhead become less during storing and calculating regarding the mobile node, and can be used to protect the downward fast-handover signaling of the SeND protocol that cannot be supported by the mobile node.

The embodiment of the protection method for a mobile IPv6 fast handover according to the first embodiment of the present disclosure is further described below with reference to the specific application scenario.

In the prior art, when the MN is handed over to an nAR in the moving process, to acquire the information of a new access link (for example, subnetwork prefix), the mobile node transmits the RtSolPr message to the current access router pAR; upon the receipt of the message, the current access router pAR transmits to the mobile node the PrRtAdv message in which the information of the new access link is notified. In this way, the mobile node can be aware of the new subnetwork prefix and acquire the new care of address (nCoA) when still located on the previous access router link, which can eliminate the delay caused by the new prefix discovery after handover.

In the second embodiment of the present disclosure, taking the current access router with the function of authenticating the access authentication of the mobile node as an example, wherein the Authenticator, which is the authentication function entity on the previous access router, authenticates the access authentication of the mobile node. At this time, a protection method for a mobile IPv6 fast handover according to this embodiment is described below with reference to Fig.4. The protection method includes the following steps.

In step s401, the MN transmits the FBU message to the pAR. The FBU message carries the MN identification and the authentication code generated by using the fast-handover key Kf which is derived from the MSK.

Specifically, after the network side device performs the access authentication, the MN obtains the MSK shared with the network side device, and the MSK is used to derive the key Kf. The method for deriving Kf can be embodied as follows.

$$Kf=KDF(MSK, Label \mid pAR\_ID \mid MN\_ID \mid nAR\text{-}ID \mid nCoA \mid pCoA \mid Key\_length),$$

where the Key Derivation Function (KDF) is an algorithm of key derivation function, and the Label is a character string, here it can be set that Label= "FMIPv6". The pAR_ID is a previous router identification, the nAR-ID is a new router identification, the nCoA is a new care of address identification, the pCoA is a previous care of address identification, and the Key_length is a length of the key.

The MN can further generate the authentication code according to the KF, and add the authentication code and the MN identification to the FBU message. In addition, when the network side device does not acquire the algorithm with which the Kf is derived from the MSK, the FBU message further needs to carry the KDF algorithm used in deriving the Kf. In addition, to avoid the replay attack, the FBU message can further carry a time stamp option.

Finally, the MN transmits the FBU message to the pAR.

[0034] In step s402, the pAR authenticates the authentication code in the FBU message, and transmits the FBack message to the MN after the authentication code passes authentication.

Specifically, the pAR receives the FBU message from the MN, and the mobile IPv6 fast-handover function entity in the pAR transmits a key request to the authentication function entity Authenticator. The authentication function entity Authenticator determines the MSK shared with the MN according to the MN identification, generates the Kf by using the same method as the MN according to the KDF algorithm carried in the FBU message, and distributes the key Kf to the mobile IPv6 fast-handover function entity. The mobile IPv6 fast-handover function entity authenticates the authentication code in the FBU message by using the Kf. When the authentication code passes authentication, the pAR generates the FBack message and transmits the FBack message to the MN.

By using the method provided in the embodiment of the present disclosure, the shared key MSK between the mobile node MN and the network side device is used to derive the fast-handover signaling protection key Kf to protect the fast-handover signaling, which solves the security problem of the fast-handover message during a mobile IPv6 fast handover, makes overhead become less during storing and calculating regarding the mobile node MN, and can be used to protect the downward fast-handover signaling of the SeND protocol that cannot be supported by the mobile node MN.

In the third embodiment of the present disclosure, taking the current access router without the function of authenticating the access authentication of the mobile node as an example, the authentication function entity Authenticator outside the previous access router authenticates the access authentication of the mobile node. In this case, a protection method for a mobile IPv6 fast handover according to the embodiment is described below with reference to Fix.5. The protection method includes the following steps.

In step s501, the MN transmits the FBU message to the pAR. The FBU message carries the MN identification, the authentication code generated by using the Kf which is derived from the master session key MSK, and the information required for authenticating the access authentication.

Specifically, after the network side device performs the access authentication, the MN obtains the MSK shared with the network side device, and the MSK is used to derive the key Kf. The method for deriving the Kf can refer to the above step s401.

The MN generates the authentication code of the FBU message by using the Kf, and adds the authentication code and the MN identification to the FBU message. In addition, the FBU message further needs to carry the algorithm for deriving Kf, and the information required for authenticating the access authentication (such as the pAR-ID and the Authenticator-ID).

Finally, the MN transmits the FBU message to the pAR.

[0042] In step s502, the pAR transmits a key acquisition request to the authentication function entity Authenticator.

When receiving the FBU message from the MN, the pAR extracts the content included in the message and transmits the key acquisition request to the Authenticator. The key acquisition request message includes information such as the MN-ID, the pAR-ID, a length of the Kf and a derivation algorithm. The key acquisition request message can be protected with cryptography. The used protection mode can be the IP security (IPSec), the Transport Layer Security (TLS), and so on.

In step s503, the authentication function entity Authenticator transmits a key acquisition response to the pAR, the response message carrying the key Kf.

After receiving the key acquiring request from the pAR, the authentication function entity Authenticator determines the MSK shared with the MN according to the MN-ID, generates the Kf by using the same method as the MN in step s501, transmits the key acquisition response message to the pAR, and distributes the key Kf to the pAR. In addition, the key response message also needs cryptography protection.

In step s504, the pAR authenticates the authentication code in the FBU message, and transmits the FBack message to the MN after the authentication code passes authentication.

After receiving Kf handed out by Authenticator, the pAR authenticates the authentication code in the FBU message by using Kf. After the authentication code passes authentication, the FBack message is generated and transmitted to the MN.

By using the method provided in the embodiment of the present disclosure, the shared key MSK between the MN and the network side device is used to derive the fast-handover signaling protection key Kf to protect the fast-handover signaling, which solves the security problem of the fast-handover message during a mobile IPv6 fast handover, makes overhead become le storing and calculating regarding the MN, and can be used to protect the downward fast-handover signaling of the SeND protocol that cannot be supported by the MN.

Except using the method for authenticating the FBU message provided in the second embodiment and the third embodiment to protect a mobile IPv6 fast handover, the mobile IPv6 fast handover can also be protected by establishing the key for protecting the mobile IPv6 fast handover in the route solicitation for proxy advertisement RtSolPr message and the proxy router advertisement PrRtAdv message prior to the FBU message.

In the fourth embodiment of the present disclosure, taking the fact that the authentication function entity Authenticator outside the previous access router authenticates the access authentication of the mobile node as an example, the protection method for a mobile IPv6 fast handover by the RtSolPr/PrRtAdv message is described.

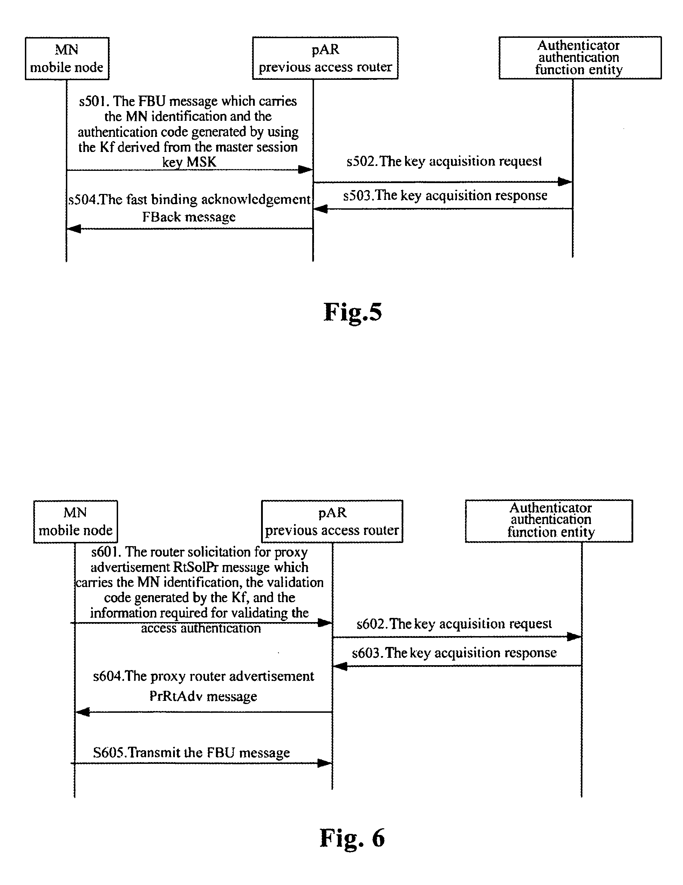

In the embodiment, a protection method for a mobile IPv6 fast handover is described below with reference to Fig.6. The protection method includes the following steps.

In step s601, the MN transmits the RtSolPr message to the pAR. The RtSolPr message carries the MN identification, the authentication code generated by using the Kf which is derived from the master session key MSK, and the information required for authenticating the access authentication.

Specifically, when the MN transmits the RtSolPr message, the used key Kf is derived according to the MSK, and one of the selectable derivation methods is shown as follows:

$$Kf = KDF\ (MSK,\ Label\ |\ pAR\_ID\ |\ MN\_ID\ |\ nAR\text{-}ID\ |\ Nc\ |\ Key\_length).$$

Unlike the above embodiment, in this embodiment one Casual Number (Nc) generated by the MN is used when Kf is generated.

The MN generates the authentication code of the RtSolPr message by using the Kf, and the RtSolPr message carries the algorithm for deriving the Kf, and the information such as the Nc, the pAR-ID, the nAR_ID and the Authenticator-ID. And the MN transmits the RtSolPr message to the previous access router.

In step s602, the pAR transmits a key acquisition request to the authentication function entity Authenticator.

When receiving the RtSolPr message from the MN, the pAR extracts the content included in the message and transmits the key acquisition request to the Authenticator corresponding to the Authenticator-ID. The key acquisition request message includes information such as the MN-ID, the pAR-ID, the Nc, the nAR_ID, a length of the Kf and a derivation algorithm, and can also carry one casual number Na generated by the pAR for avoiding the replay attack. The key acquisition request message can be protected with cryptography. The used protection mode can be the IP security (IPSec), the Transport Layer Security (TLS), and so on.

In step s603, the authentication function entity Authenticator transmits a key acquisition response to the pAR, the response message carrying the key Kf.

After receiving the key acquisition request form the pAR, the authentication function entity Authenticator determines the MSK shared with the MN according to the MN-ID, generates the Kf by using the same method as the MN in step s601, transmits the key acquisition response message to the pAR, and distributes the key Kf to the pAR. The message further includes the Na received in the previous step, for avoiding replay attack. In addition, the key response message also needs cryptography protection.

In step s604, the pAR authenticates the authentication code in the RtSolPr message, and transmits the PrRtAdv message to the MN after the authentication code passes authentication.

After the pAR receives the key response message of the authentication function entity Authenticator, the pAR first extracts out the Kf after authentication performed with the Na, and the pAR authenticates the authentication code in the RtSolPr message by using the Kf. When the authentication code passes authentication, the PrRtAdv message and its authentication code are generated and transmitted to the MN.

In step s605, the MN transmits FBU message to the pAR.

**[0063]** After the MN receives the PrRtAdv message transmitted by the pAR, the MN authenticates the authentication code carried in the message by using the Kf. When the authentication code passes authentication, the FBU message is generated, and the authentication code of the FBU message is generated by using the Kf. The FBU message carrying the newly generated authentication code is transmitted to the pAR. The pAR has saved the Kf used by the MN, and thus the subsequent fast-handover flow can be performed continuously according to the method in the prior art, with the difference that the subsequent signaling interaction always uses the Kf for protection.

Furthermore, to improve security, in each embodiment described above, a private identifier MN-PID can be generated for the MN according to the shared key between the Authenticator and the MN. The MN-ID in all messages is replaced by the private identifier, and it is identified in the message that the private identifier is used.

$$\text{MN-PID=PRF (Kp, MN-ID| Authenticator-ID),}$$

where the Kp is the shared key between the MN and the Authenticator and the Kp can be the Kf, the MSK or its derived key, and the Pseudo Random Function (PRF) is the algorithm used to acquire the MN-PID. In the step of generating the Kf by the Authenticator, the original MN-ID can be acquired by using the MN-PID.

Furthermore, to restrain the MN from selecting the address of other nodes as the nCoA to attack, in each embodiment described above, an interface identification nCoA_IID of the nCoA can be generated by using the following way to replace the nCoA in all messages.

$$\text{nCoA\_IID=PRF (Knr, nCoA\_prefix | pCoA | nAR | pAR),}$$

where the Knr is the shared key between the MN and the pAR, and the nCoA_IID is generated by concatenating the prefix nCoA_prefix of the new access link of the nCoA in the PrRtAdv and the interface identification together.

After the nCoA_IID is generated, the pAR needs to notify the MN in the PrRtAdv message that it needs to use the nCoA_IID.

By using the method provided in the above embodiment of the present disclosure, the shared key between the mobile node and the network side device is used to derive the fast-handover signaling protection key to protect the fast-handover signaling, which solves the security problem of the fast-handover message during a mobile IPv6 fast handover, makes overhead become less during storing and calculating regarding the mobile node, and can be used to protect the downward fast-handover signaling of the SeND protocol that cannot be supported by the mobile node.

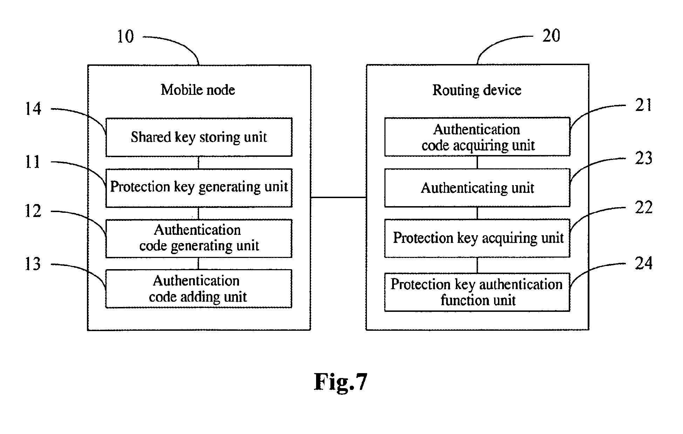

In the fifth embodiment of the present disclosure, a protection system for a mobile IPv6 fast handover is further provided, with the structure as shown in Fig.7. The protection system includes a mobile node 10 and a routing device 20, where a fast-handover signaling protection key for protecting the fast-handover signaling is derived by using the shared key between the mobile node and the network side device.

Specifically, the mobile node 10 further includes:

a protection key generating unit 11, configured to generate the fast-handover signaling protection key by using the key shared with the network side device. The shared key can be the MSK which is generated during an access authentication of the mobile node and is shared between the network side device and the mobile node;
an authentication code generating unit 12, configured to generate an authentication code according to the protection key generated by the protection key generating unit 11. The step of generating the protection key can also involve other parameters including one or a plurality of the following parameters: a mobile node device identification, a previous router identification, a rear router identification, a preset character string, a previous care of address, a new care of address, a length of the protection key and a random number; and
an authentication code adding unit 13, configured to add the authentication code generated by the authentication code generating unit 12 to the fast-handover signaling and transmit the fast-handover signaling to a router. The fast-handover signaling can be the router solicitation for proxy advertisement (RtSolPr) message or the fast binding update FBU message.

In addition, the mobile node 10 further includes:

a shared key storing unit 14, configured to store the key shared with the network side device and provide the shared key to the protection key generating unit 11 for generating the protection key. The shared key can be the master session key MSK which is generated during an access authentication of the mobile node and is shared between the network side device and the mobile node.

Specifically, the routing device 20 further includes:

an authentication code acquiring unit 21, configured to acquire an authentication code carried in a fast-handover signaling from the mobile node 10;

a protection key acquiring unit 22, configured to acquire, from a local device or a network side device, a protection key which is used by the mobile node 10 to generate the authentication code, wherein the protection key is generated by the mobile node 10 using a key shared with the network side device; and

an authenticating unit 23, configured to authenticate, according to the protection key acquired by the protection key acquiring unit 22, the authentication code acquired by the authentication code acquiring unit 21, and configured to transmit a response to the mobile node 10 when the authentication code passes authentication.

In addition, the routing device 20 further includes:

a protection key authentication function unit 24, configured to acquire the protection key according to the key shared with the mobile node 10 and according to a parameter required for generating the protection key, and provide the protection key to the protection key acquiring unit 22. In a specific network environment, the protection key authentication function unit 24 can also be taken as a separate function entity located outside the routing device 20.

By the system and the device provided in the above embodiments of the present disclosure, the shared key between the mobile node and the network side device is used to derive the fast-handover signaling protection key to protect the fast-handover signaling, which solves the security problem of the fast-handover message during a mobile IPv6 fast handover, makes overhead become less during storing and calculating regarding the mobile node, and can be used to protect the downward fast-handover signaling of the SeND protocol that cannot be supported by the mobile node.

With the description of the above embodiments, persons skilled in the art can clearly appreciate that the present disclosure can be realized by means of a hardware or by means of a software plus a necessary common hardware platform. Based on the understanding, the technical solutions of the present disclosure substantially can be embodied in the form of a software product. The software product is stored in a nonvolatile storage medium (which can be CD-ROM, USB flash drive, mobile hard disc drive, and so on), including a plurality of instructions for making computer equipment (which can be a personal computer, a server or network equipment, and so on) to execute the methods stated in the embodiments of the present disclosure.

To sum up, the above contents are only preferred embodiments of the present disclosure, and are not intended to limit the protection scope of the present disclosure.

**Claims**

1. A protection method for a mobile Internet Protocol version 6, IPv6, fast handover, comprising:

1 generating (S301) a fast-handover signaling protection key by using a key which is shared with a network side device;

generating (S302) an authentication code according to the fast-handover signalling protection key; and

adding(S303) the authentication code to a fast-handover signaling and transmitting (S303) the fast-handover signaling to a router, **characterized in that** the step of generating the fast-handover signaling protection key by using the key shared with the network side device comprises:

generating the fast-handover signaling protection key by using the key shared with the network side device and by using a mobile node device identification and one or a plurality of the following parameters: a previous router identification, a new access router identification, a preset character string, a previous care of address, a new care of address, a length of the protection key, and a random number; wherein the mobile node device identification is a private identification generated for the mobile node according to the key shared with the network side device.

2. The protection method for a mobile IPv6 fast handover according to claim 1 wherein the key shared with the network side device is a master session key Master Session Key, MSK, generated during an access authentication.

3. The protection method for a mobile IPv6 fast handover according to claim 1, wherein the fast-handover signaling is a router solicitation for proxy advertisement RtSolPr message or a fast binding update Fast Binding Update, FBU, message.

4. A mobile node, comprising:

a protection key generating unit(11), configured to generate a fast-handover signaling protection key by using a key which is shared with a network side device;
an authentication code generating unit(12), configured to generate an authentication code according to the fast-handover signalling protection key generated by the protection key generating unit; and
an authentication code adding unit(13), configured to add the authentication code generated by the authentication code generating unit to a fast-handover signaling and transmit the fast-handover signaling to a router, **characterized in that**,
the protection key generating unit (11) is configured such that the fast-handover signalling protection key is generated by the mobile node by using the key shared with the network side device, and by using the mobile node device identification and one or a plurality of the following parameters: a previous router identification, a new access router identification, a preset character string, a previous care of address, a new care of address, a length of the protection key, and a random number; wherein the mobile node device identification is a private identification generated for the mobile node according to the key shared with the network side device.

5. The mobile node according to claim 4, further comprising:

a shared key storing unit(14), configured to store the key shared with the network side device and provide the key to the protection key generating unit for generating the protection key.

6. A protection system for a mobile Internet Protocol version 6, IPv6, fast handover, comprising the mobile node according to any one of claims 4-5 and a routing device, wherein the routing device comprising:

an authentication code acquiring unit(21), configured to acquire an authentication code carried in a fast-handover signaling from the mobile node;
a fast-handover signalling protection key acquiring unit(22), configured to acquire, from a local device or a network side device, a fast-handover signalling protection key which is used by the mobile node to generate the authentication code, wherein the fast-handover signalling protection key is generated by the mobile node using a key shared with a network side device; and
an authenticating unit(23), configured to authenticate, according to the fast-handover signalling protection key acquired by the fast-handover signalling protection key acquiring unit, the authentication code acquired by the authentication code acquiring unit, and configured to transmit a response to the mobile node when the authentication code passes authentication.

**Patentansprüche**

1. Schutzverfahren für einen schnellen Kanalwechsel gemäß dem mobilen Internetprotokoll der Version 6, IPv6, das Folgendes umfasst:

Erzeugen (S301) eines Signalgebungsschutzschlüssels für schnellen Kanalwechsel unter Verwendung eines Schlüssels, der mit einer netzseitigen Vorrichtung gemeinsam genutzt wird;
Erzeugen (S302) eines Authentifizierungscodes gemäß dem Signalgebungsschutzschlüssel für schnellen Kanalwechsel; und
Hinzufügen (S303) des Authentifizierungscodes zu einer Signalgebung für schnellen Kanalwechsel und Senden (S303) der Signalgebung für schnellen Kanalwechsel zu einem Router, **dadurch gekennzeichnet, dass** der Schritt des Erzeugens des Signalgebungsschutzschlüssels für schnellen Kanalwechsel unter Verwendung des mit der netzseitigen Vorrichtung gemeinsam genutzten Schlüssels Folgendes umfasst:

Erzeugen des Signalgebungsschutzschlüssels für schnellen Kanalwechsel unter Verwendung des mit der netzseitigen Vorrichtung gemeinsam genutzten Schlüssels und unter Verwendung einer Mobilknotenvorrichtungs-Kennung und eines oder mehrerer der folgenden Parameter: eine frühere Router-Kennung, eine Router-Kennung für erneuten Zugang, eine im Voraus eingestellte Zeichenkette, eine frühere Care of Address, eine neue Care of Address, eine Länge des Schutzschlüssels und eine Zufallszahl; wobei die Mobilknotenvorrichtungs-Kennung eine private Kennung ist, die für den Mobilknoten gemäß dem mit der netzseitigen Vorrichtung gemeinsam genutzten Schlüssel erzeugt wird.

2. Schutzverfahren für einen schnellen Kanalwechsel gemäß dem mobilen IPv6 nach Anspruch 1, wobei der mit der netzseitigen Vorrichtung gemeinsam genutzte Schlüssel ein Master-Sitzungsschlüssel, Master Session Key, MSK, der während einer Zugangsauthentifizierung erzeugt wird, ist.

3. Schutzverfahren für einen schnellen Kanalwechsel gemäß dem mobilen IPv6 nach Anspruch 1, wobei die Signalgebung für schnellen Kanalwechsel eine Router-Anforderung für eine Proxy-Advertisement-Nachricht, RtSolPr-Nachricht, oder eine Schnellbindungsaktualisierungs-, Fast-Binding-Update-Nachricht, FBU-Nachricht, ist.

4. Mobilknoten, der Folgendes umfasst:

eine Schutzschlüssel-Erzeugungseinheit (11), die konfiguriert ist, einen Signalgebungsschutzschlüssel für schnellen Kanalwechsel unter Verwendung eines Schlüssels, der mit einer netzseitigen Vorrichtung gemeinsam genutzt wird, zu erzeugen;
eine Authentifizierungscode-Erzeugungseinheit (12), die konfiguriert ist, einen Authentifizierungscode gemäß dem Signalgebungsschutzschlüssel für schnellen Kanalwechsel, der durch die Schutzschlüssel-Erzeugungseinheit erzeugt wird, zu erzeugen; und
eine Authentifizierungscode-Hinzufügungseinheit (13), die konfiguriert ist, den durch die Authentifizierungscode-Erzeugungseinheit erzeugten Authentifizierungscode zu einer Signalgebung für schnellen Kanalwechsel hinzuzufügen und die Signalgebung für schnellen Kanalwechsel zu einem Router zu senden, **dadurch gekennzeichnet, dass**
die Schutzschlüssel-Erzeugungseinheit (11) in der Weise konfiguriert ist, dass der Signalgebungsschutzschlüssel für schnellen Kanalwechsel durch den mobilen Knoten unter Verwendung des mit der netzseitigen Vorrichtung gemeinsam genutzten Schlüssels und unter Verwendung der Mobilknotenvorrichtungs-Kennung und eines oder mehrerer der folgenden Parameter erzeugt wird: eine frühere Router-Kennung, eine Router-Kennung für erneuten Zugang, eine im Voraus eingestellte Zeichenkette, eine frühere Care of Address, eine neue Care of Address, eine Länge des Schutzschlüssels und eine Zufallszahl; wobei die Mobilknotenvorrichtungs-Kennung eine private Kennung ist, die für den mobilen Knoten in Übereinstimmung mit dem mit der netzseitigen Vorrichtung gemeinsam genutzten Schlüssel erzeugt wird.

5. Mobilknoten nach Anspruch 4, der ferner Folgendes umfasst:

eine Einheit (14) zum Speichern eines gemeinsam genutzten Schlüssels, die konfiguriert ist, den mit der netzseitigen Vorrichtung gemeinsam genutzten Schlüssel zu speichern und den Schlüssel für die Schutzschlüssel-Erzeugungseinheit bereitzustellen, um den Schutzschlüssel zu erzeugen.

6. Schutzsystem für einen schnellen Kanalwechsel gemäß dem mobilen Internetprotokoll der Version 6, IPv6, das den mobilen Knoten nach einem der Ansprüche 4-5 und eine Router-Vorrichtung umfasst, wobei die Router-Vorrichtung Folgendes umfasst:

eine Authentifizierungscode-Erfassungseinheit (21), die konfiguriert ist, einen Authentifizierungscode zu erfassen, der in einer Signalgebung für schnellen Kanalwechsel von dem mobilen Knoten transportiert wird;
eine Einheit (22) zum Erfassen eines Signalgebungsschutzschlüssels für schnellen Kanalwechsel, die konfiguriert ist, von einer lokalen Vorrichtung oder von einer netzseitigen Vorrichtung einen Signalgebungsschutzschlüssel für schnellen Kanalwechsel zu erfassen, der von dem mobilen Knoten verwendet wird, um den Authentifizierungscode zu erzeugen, wobei der Signalgebungsschutzschlüssel für schnellen Kanalwechsel durch den mobilen Knoten unter Verwendung eines mit einer netzseitigen Vorrichtung gemeinsam genutzten Schlüssels erzeugt wird; und
eine Authentifizierungseinheit (23), die konfiguriert ist, den Authentifizierungscode, der durch die Authentifizierungscode-Erfassungseinheit erfasst wird, in Übereinstimmung mit dem Signalgebungsschutzschlüssel für schnellen Kanalwechsel, der durch die Einheit zum Erfassen eines Signalgebungsschutzschlüssels für schnellen Kanalwechsel erfasst wird, zu authentifizieren, und konfiguriert ist, eine Antwort an den mobilen Knoten zu senden, wenn der Authentifizierungscode die Authentifizierung durchläuft.

**Revendications**

1. Procédé de protection pour un transfert mobile rapide selon le Protocole Internet version 6, IPv6, comprenant :

   la génération (S301) d'une clé de protection de signalisation de transfert rapide en utilisant une clé partagée avec un dispositif côté réseau ;
   la génération (S302) d'un code d'authentification en fonction de la clé de protection de signalisation de transfert rapide ; et
   l'ajout (S303) du code d'authentification à une signalisation de transfert rapide et la transmission (S303) de la signalisation de transfert rapide à un routeur, **caractérisé en ce que** l'étape de génération de la clé de protection de signalisation de transfert rapide en utilisant la clé partagée avec le dispositif côté réseau comprend :

   la génération de la clé de protection de signalisation de transfert rapide en utilisant la clé partagée avec le dispositif côté réseau et en utilisant une identification de dispositif de noeud mobile et un ou une pluralité des paramètres suivants : une identification de routeur précédent, une identification de nouveau routeur d'accès, une chaîne de caractères préétablie, une adresse temporaire précédente, une nouvelle adresse temporaire, une longueur de la clé de protection, et un numéro aléatoire ; l'identification de dispositif de noeud mobile étant une identification privée générée pour le noeud mobile en fonction de la clé partagée avec le dispositif côté réseau.

2. Procédé de protection pour un transfert mobile rapide IPv6 selon la revendication 1, dans lequel la clé partagée avec le dispositif côté réseau est une clé session maître Master Session Key, MSK, générée durant une authentification d'accès.

3. Procédé de protection pour un transfert mobile rapide IPv6 selon la revendication 1, dans lequel la signalisation de transfert rapide est une sollicitation de routeur pour un message d'annonce mandataire RtSolPr ou un message d'actualisation liante rapide Fast Binding Update, FBU.

4. Noeud mobile, comprenant :

   une unité de génération de clé de protection (11), configurée pour générer une clé de protection de signalisation de transfert rapide en utilisant une clé partagée avec un dispositif côté réseau ;
   une unité de génération de code d'authentification (12), configurée pour générer un code d'authentification en fonction de la clé de protection de signalisation de transfert rapide générée par l'unité de génération de clé de protection ; et
   une unité d'ajout de code d'authentification (13), configurée pour ajouter le code d'authentification généré par l'unité de génération de code d'authentification à une signalisation de transfert rapide et transmettre la signalisation de transfert rapide à un routeur, **caractérisé en ce que**
   l'unité de génération de clé de protection (11) est configurée de telle sorte que la clé de protection de signalisation de transfert rapide soit générée par le noeud mobile en utilisant la clé partagée avec le dispositif côté réseau, et en utilisant l'identification de dispositif de noeud mobile et un ou une pluralité des paramètres suivants : une identification de routeur précédent, une identification de nouveau routeur d'accès, une chaîne de caractères préétablie, une adresse temporaire précédente, une nouvelle adresse temporaire, une longueur de la clé de protection, et un numéro aléatoire, l'identification de dispositif de noeud mobile étant une identification privée générée pour le noeud mobile en fonction de la clé partagée avec le dispositif côté réseau.

5. Noeud mobile selon la revendication 4, comprenant en outre :

   une unité de mémorisation de clé partagée (14), configurée pour mémoriser la clé partagée avec le dispositif côté réseau et fournir la clé à l'unité de génération de clé de protection pour générer la clé de protection.

6. Système de protection pour un transfert mobile rapide selon le Protocole Internet version 6, IPv6, comprenant le noeud mobile selon l'une quelconque des revendications 4-5 et un dispositif de routage, le dispositif de routage comprenant :

   une unité d'acquisition de code d'authentification (21), configurée pour acquérir un code d'authentification inclus dans une signalisation de transfert rapide provenant du noeud mobile ;
   une unité d'acquisition de clé de protection de signalisation de transfert rapide (22), configurée pour acquérir, depuis un dispositif local ou un dispositif côté réseau, une clé de protection de signalisation de transfert rapide qui est utilisée par le noeud mobile pour générer le code d'authentification, la clé de protection de signalisation de transfert rapide étant générée par le noeud mobile en utilisant une clé partagée avec un dispositif côté réseau ; et

une unité d'authentification (23), configurée pour authentifier, en fonction de la clé de protection de signalisation de transfert rapide acquise par l'unité d'acquisition de clé de protection de signalisation de transfert rapide, le code d'authentification acquis par l'unité d'acquisition de code d'authentification, et configurée pour transmettre une réponse au noeud mobile quand le code d'authentification réussit l'authentification.

**Fig.1**

**Fig.2**

s301    The mobile node generates a fast handover signaling protection key by using a key which is shared with the network side device

s302    The mobile node generates an authentication code according to the protection key

s303    The mobile node adds the authentication code into a fast-handover signaling and transmits the fast-handover signaling to a router

s304    The router authenticates the fast-handover signaling, and returns a response message after the fast-handover signaling passes authentication

**Fig.3**

MN
mobile node

pAR
previous access
router

s401. The FBU message which carries the
MN identification as well as the authentication
code generated by using the Kf derived

from the master session key MSK

s402. The fast binding

acknowledgement FBack message

**Fig.4**

| MN mobile node | pAR previous access router | Authenticator authentication function entity |
|---|---|---|

s501. The FBU message which carries the MN identification and the authentication code generated by using the Kf derived from the master session key MSK →

s502.The key acquisition request →

s504.The fast binding acknowledgement FBack message ←

s503.The key acquisition response ←

## Fig.5

| MN mobile node | pAR previous access router | Authenticator authentication function entity |
|---|---|---|

s601. The router solicitation for proxy advertisement RtSolPr message which carries the MN identification, the validation code generated by the Kf, and the information required for validating the access authentication →

s602.The key acquisition request →

s603.The key acquisition response ←

s604.The proxy router advertisement PrRtAdv message ←

S605.Transmit the FBU message →

## Fig. 6

10

20

| Mobile node |
|---|
| Shared key storing unit |
| Protection key generating unit |
| Authentication code generating unit |
| Authentication code adding unit |

14

11

12

13

| Routing device |
|---|
| Authentication code acquiring unit |
| Authenticating unit |
| Protection key acquiring unit |
| Protection key authentication function unit |

21

23

22

24

**Fig.7**

# EP 2 194 672 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Distributing a Symmetric FMIPv6 Handover Key using SEND''; draft-ietf-mipshop-handover-key-02.txt. *IETF STANDARD-WORDING-DRAFT, INTERNET ENGINEERING TASK FORCE, IETF, CH,* 01 September 2007, vol. mipshop (2

- **NARAYANAN QUALCOMM V et al.** Establishing Handover Keys using Shared Keys; draft-vidya-mipshop-handover-keys-aaa-04.txt. *IETF STANDARD-WORKING-DRAFT, INTERNET ENGINEERING TASK FORCE, IETF, CH,* 06 March 2007, ISSN 0000-0004